# EUROPEAN PATENT APPLICATION

(11) **EP 0 928 104 A2**
(43) Date of publication of application: **07.07.1999**
(21) Application number: 98308555.6
(22) Date of filing: 20.10.1998
(51) Int. Cl.: H04N 5/225, G02B 5/00

(54) **Image processing device having a light path refraction plate for improving resolution of an image pickup device**

(30) Priority: 29.12.1997 KR 9775881
(71) Applicant: Samsung Electronics Co., Ltd., Suwon-city, Kyungki-do (KR)
(72) Inventor: Lim, Dae-soon, Suji-eup, Yongin-city, Kyungki-do (KR); Kim, Jong-cheon, Paldal-gu, Suwon-city, Kyungki-do (KR)
(74) Representative: Robinson, Ian Michael

(57) **Abstract**

An image processing device (10) having a light path refraction plate (11), where the refraction plate refracts the light from an object and projects it on an image pickup device. The refraction plate (11) is movable within a predetermined angular range. A ray composing an image of the object is projected successively on a predetermined number of positions with respect to a corresponding pixel of the image pickup device, and a perfect image is obtained by synthesizing a plurality of images obtained by such a process. Thus, a high quality image having a high resolution can be obtained with an image pickup device having a low resolution.

## Description

The present invention relates to an image processing device, and more particularly, to an image processing device for use in a camera in conjunction with an image pickup device.

Generally, in a prior art camera, such as a still camera or a camcorder, adopting a solid state image pickup device, the quality of the photographed image depends on the resolution of the solid state image pickup device. Accordingly, it is preferable to adopt a solid state image pickup device of high resolution in order to get a high quality image.

However, in order to improve the resolution of the solid state image pickup-device, many more light receiving elements have to be integrated in a limited area thereof, so the technique for integration should be high. Furthermore, the higher the degree of integration, the smaller the light receiving area becomes, so a light receiving element of higher sensitivity should be used.

Therefore, it is very costly and difficult to plan and manufacture a high resolution image pickup device, causing the camera in which it is installed to be expensive.

It is an aim of the present invention to overcome or at least reduce the above described problems in the prior art, and accordingly it is an aim of at least preferred embodiments of the present invention to provide an image processing device capable of obtaining an image of high quality having a high resolution with an image pickup device having a low resolution.

According to the present invention there is provided an image processing device as set fourth in claim 1 appended hereto. Preferred features of the invention are apparent from the dependent claims and the description which follows.

According to a first aspect of the present invention there is provided an image processing device comprising: a light path refraction plate disposed at a front of an image pickup device, the light path refraction plate for refracting light from an object and projecting the light onto the image pickup device; a means for supporting the light path refraction plate so as to be capable of rotating within a predetermined angular range; and a means for driving the light path refraction plate so that a ray of the light composing an image of the object is successively projected on a predetermined number of positions of a corresponding pixel of the image pickup device.

The supporting means supports the light path refraction plate so that the light path refraction plate is rotatable in two angular directions different from each other. Preferably, the supporting means comprises an inner holder for supporting the light path refraction plate to be capable of rotating about a horizontal shaft, and an outer holder for supporting the inner holder to be capable of rotating about a vertical shaft.

It is preferable that the predetermined angular range is an angular range corresponding to a half or one pitch of the pixel, and the predetermined number is four.

The driving means is preferably a bimorphemic piezo, or a voice coil motor.

For a better understanding of the invention, and to show how embodiments of the same may be carried into effect, reference will now be made, by way of example, to the accompanying diagrammatic drawings, in which:
Figure 1 is a side sectional view of a camera having an image processing device according to a preferred embodiment of the present invention;
Figure 2a is an enlarged plan view of the image processing device shown in Figure 1;
Figure 2b is a sectional view of Figure 2a taken along the line IIb-IIb;
Figure 2c is a sectional view of Figure 2a taken along the line IIc-IIc;
Figure 2d is an enlarged sectional view of a main part of the image processing device for illustrating the operation thereof;
Figure 3a is an example of an image projected on an image pickup device at an initial state of a light path refraction plate in the image processing device;
Figure 3b is an example of an image which is shifted horizontally at a half or one pitch by the light path refraction plate in the image processing device;
Figure 3c is an example of an image which is shifted horizontally at a half or one pitch and vertically at a half or one pitch by the light path refraction plate in the image processing device according to the present invention;
Figure 3d is an example of an image which is shifted vertically at a half or one pitch by the light path refraction plate in the image processing device;
Figure 4 is a view showing synthesized states of the images shown in FIGS 3a through 3d.

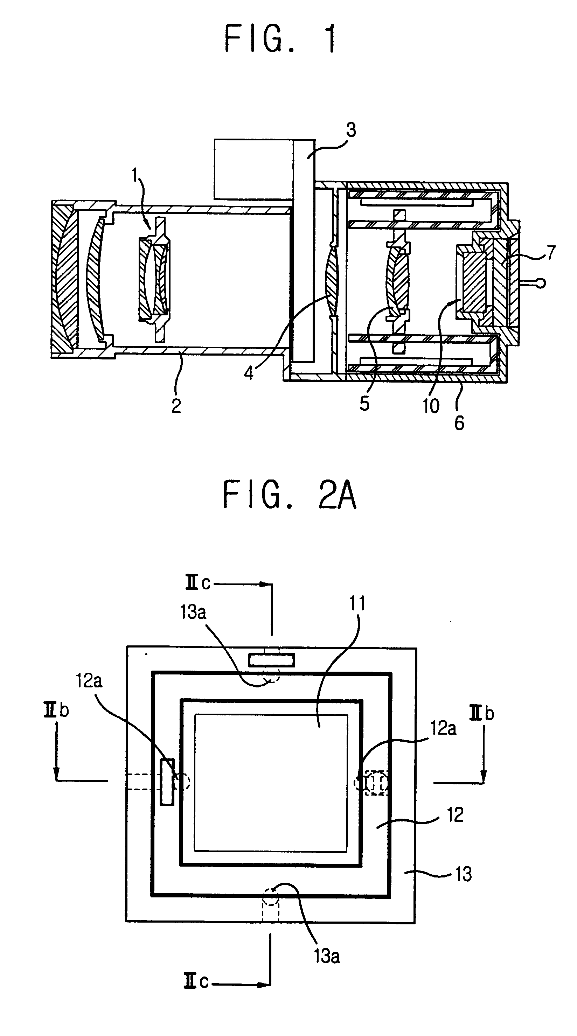

Referring to the accompanying drawings, Figure 1 is a side sectional view of a camera having an image processing device according to a preferred embodiment of the present invention. As shown, the camera has a body tube 2 in which a zoom lens 1 is installed to be capable of moving forwardly and backwardly, a barrel master 6 which is coupled at the rear portion of the body tube 2 and is installed with a diaphragm 3 for controlling the amount of incident light, a fixed lens 4, and a focusing lens 5 at the inner space thereof, an image pickup device 4 installed at the rear of the barrel master 6, and an image processing device 10 installed between the image pickup device 7 and the focusing lens 5.

The image of an object coming into the tube body 2 through the zoom lens 1 is projected onto the image pickup device 7 through the fixed lens 4 and the focusing lens 5.

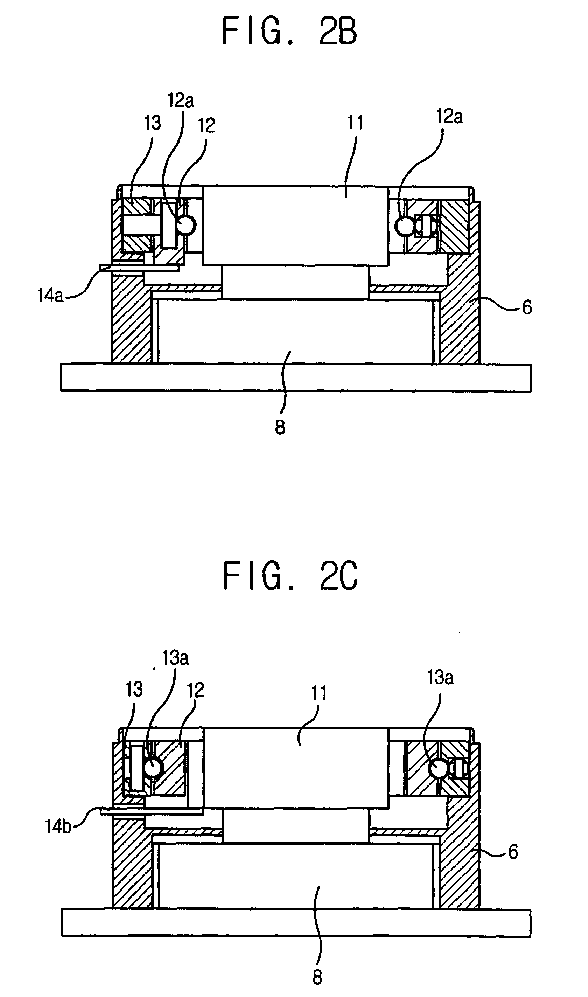

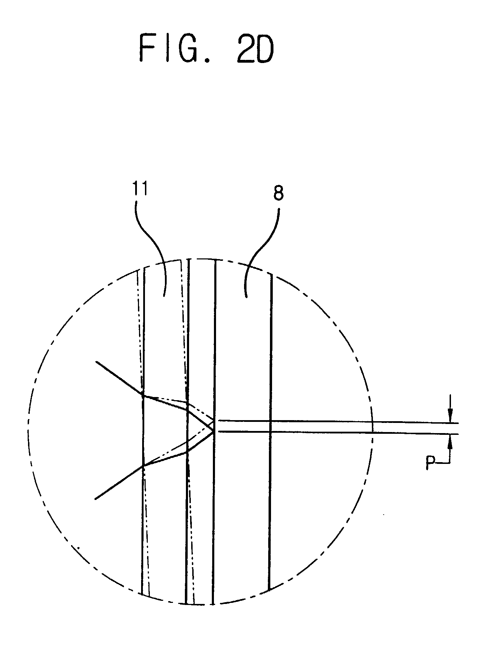

Figure 2a is an enlarged plan view of the image processing device shown in Figure 1, Figure 2b is a sectional view of Figure 2a taken along the line IIb-IIb, and Figure 2c is a sectional view of Figure 2a taken along the line IIc-IIc.

The image processing device 10 comprises a light path refraction plate 11 for refracting the light coming from the object, a supporting device for supporting the light path refraction plate to be capable of rotating within a predetermined angular range, and a driving device for driving the light path refraction plate 11.

The supporting device includes an inner holder 12 for supporting the light path refracting plate 11, and an outer holder 13 for supporting the inner holder 12. The light path refracting plate 11 and the inner holder 12 are connected with each other by a horizontal shaft 12a, whereby the light path refraction plate 11 is supported to be capable of rotating about the horizontal shaft 12a within a predetermined angular range relative to the inner holder 12. The inner holder 12 and the outer holder 13 are connected with each other by a vertical shaft 13a, whereby the inner holder 12 is supported to be capable of rotating about the vertical shaft 13a within a predetermined angular range relative to the outer holder 13. The outer holder 13 is fixed to the image pickup device 7. Accordingly, the light path refraction plate 11 is movable about the horizontal shaft 12a and the vertical shaft 13a within the predetermined angular range.

As shown in Figure 2d with a dotted line, when the light path refraction plate 11 is rotated, the light projected on the image pickup device 7 is refracted by the light path refraction plate 11, whereby the position of a ray of the light projected onto the image pickup device 7 is shifted as much as a certain distance P. Preferably, the predetermined angular range is an angular range such that the distance P refracted by the light path refraction plate 11 while the light path refraction plate 11 is maximally rotated is equal to one-half or one times the pixel pitch of the image pickup device 7.

The driving device (14) comprises a first driving part 14a for rotating the inner holder 12 about the vertical shaft 13a, and a second driving part 14b for rotating the light path refraction plate 11 about the horizontal shaft 12a. Consequently, the light path refraction plate 11 is rotated about the horizontal and vertical shafts 12a and 13a by the driving device 14a and 14b. As the respective driving parts 14a and 14b, a bimorphemic piezo or a voice coil motor is preferably used, although other driving parts may be used for this purpose.

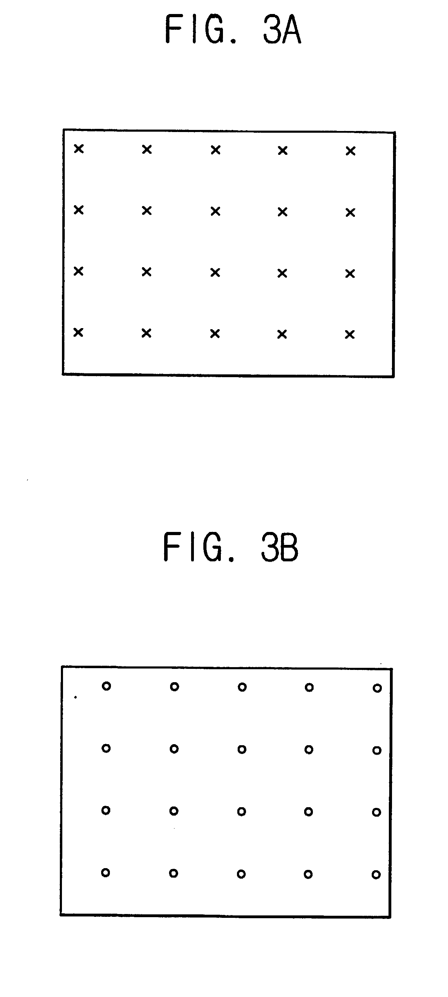

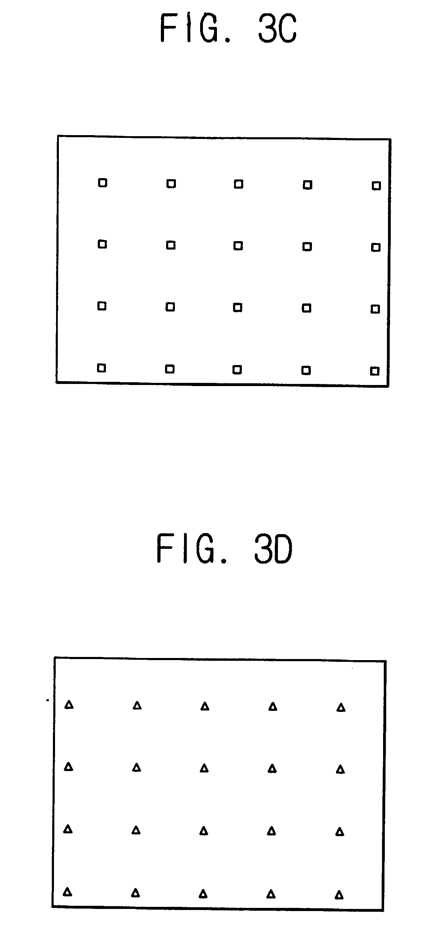

Examples are shown in Figures 3a through 3d, which show the images projected on the image pickup device 7 through the light path refraction plate 11 of the image processing device. The example of the image projected on the image pickup device 7 while the light path refraction plate 11 is in its initial position is shown in Figure 3a. Thereafter, as the light path refraction plate 11 is rotated in the horizontal direction, the image of the object is shifted by one-half or one times the pixel pitch in the horizontal direction as shown in Figure 3b. Then, the light path refraction plate 11 is rotated in the vertical direction, and thereby the image of the object is obtained at the position shifted by one-half or one times the pixel pitch in the horizontal direction and by one-half or one times the pixel pitch in the vertical direction as shown in Figure 3c. Finally, the light path refraction plate 11 is reversely rotated in the horizontal direction, and thereby the image of the object is obtained at the position shifted by one-half or one times the pixel pitch in the vertical direction. Thereafter, the light path refraction plate 11 is reversely rotated in the vertical direction to be returned to its initial position.

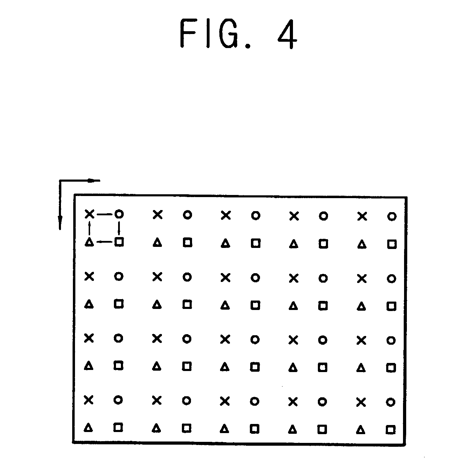

According to such a process, the image of the object is projected on the positions shown in Figures 3a through 3b, and the image shown in Figure 4 can be obtained by synthesizing such images. The shifted distance of the image due to the rotation of the light path refraction plate 11 is a distance corresponding to one-half or one times the pixel pitch of the image pickup device 7, so a ray of the light of the image occupies a quarter of the area of one pixel. Therefore, a perfect image is obtained by synthesizing four images, and such an image has four times the resolution compared to the resolution of the image pickup device 7.

As described above, according to the present invention, a high quality image having a high resolution can be obtained with an image pickup device having a low resolution.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image processing device (10) comprising:
a light path refraction plate (11) locatable before an image pickup device (7), said light path refraction plate for refracting and projecting light onto said image pickup device (7);
supporting means (12,13) for supporting said light path refraction plate (11) so as to be capable of rotating within a predetermined angular range; and
driving means (14a, 14b) for driving said light path refraction plate (11) so that a ray of the light is successively projected on a predetermined number of positions with respect to a corresponding pixel of said image pickup device (7).

2. The image processing device as claimed in claim 1, wherein said supporting means (12,13) supports said light path refraction plate (11) so that said light path refraction plate is rotatable in two angular directions different from each other.

3. The image processing device as claimed in claim 2, wherein said supporting means comprises an inner holder (12) for supporting said light path refraction plate to be capable of rotating about a horizontal shaft (12a), and an outer holder (13) for supporting said inner holder (12) to be capable of rotating about a vertical shaft (13a).

4. The image processing device as claimed in any of claims 1 to 3, wherein said predetermined angular range is an angular range corresponding to a half pitch of said pixel.

5. The image processing device as claimed in any of claims 1 to 3, wherein said predetermined angular range is an angular range corresponding to one pitch of said pixel

6. The image processing device as claimed in any of claims 1 to 5, wherein said driving means is a bimorphemic piezo.

7. The image processing device as claimed in any of claims 1 to 5, wherein said driving means is a voice coil motor.

8. The image processing device as claimed in claim 1, wherein said predetermined number is four.

9. A camera comprising:
an image processing device as claimed in any of claims 1 to 8; and
means for forming a composite image by synthesising said predetermined number of images formed by driving said light path refraction plate to said predetermined number of positions.
